(19) Europäisches Patentamt
European Patent Office
Office européen des brevets

(11) EP 0 722 477 B1

(12) **EUROPÄISCHE PATENTSCHRIFT**

(45) Veröffentlichungstag und Bekanntmachung des Hinweises auf die Patenterteilung:
**10.12.1997 Patentblatt 1997/50**

(21) Anmeldenummer: **94928827.8**

(22) Anmeldetag: **27.09.1994**

(51) Int Cl.6: **C09D 157/12**

(86) Internationale Anmeldenummer:
**PCT/EP94/03224**

(87) Internationale Veröffentlichungsnummer:
**WO 95/09896 (13.04.1995 Gazette 1995/16)**

(54) **WÄSSRIGE POLYMERISATZUBEREITUNGEN**
AQUEOUS POLYMER PREPARATIONS
PREPARATIONS POLYMERES AQUEUSES

(84) Benannte Vertragsstaaten:
**AT BE CH DE DK ES FR GB IT LI NL SE**

(30) Priorität: **07.10.1993 DE 4334178**

(43) Veröffentlichungstag der Anmeldung:
**24.07.1996 Patentblatt 1996/30**

(73) Patentinhaber: **BASF AKTIENGESELLSCHAFT
67056 Ludwigshafen (DE)**

(72) Erfinder:
- **BAUMSTARK, Roland
D-67434 Neustadt (DE)**
- **PORTUGALL, Michael
D-67157 Wachenheim (DE)**

(56) Entgegenhaltungen:
**DE-U- 9 301 444**

EP 0 722 477 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die vorliegende Erfindung betrifft wäßrige Polymerisatzubereitungen, enthaltend

A) wenigstens ein im wäßrigen Medium gelöstes und/oder dispergiertes, aus wenigstens eine ethylenisch ungesättigte Kohlenstoff-Kohlenstoff-Bindung aufweisenden Monomeren in polymerisierter Form aufgebautes Polymerisat A, mit der Maßgabe, daß das Polymerisat A wenigstens eine Gruppierung der allgemeinen Formel I

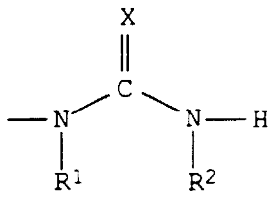

(I),

in der die Variablen bedeuten:

X: 0 oder S und

$R^1$, $R^2$: jedes von beiden Wasserstoff oder eine $C_1$- bis $C_5$-Alkylgruppe, oder beide zusammen eine überbrükkende $C_2$- bis $C_4$-Alkylengruppe, die bis zu zweifach mit einer $C_1$- bis $C_4$-Alkoxygruppe und/oder Hydroxylgruppe substituiert sein kann,

aufweist,

B) wenigstens eine, wenigstens zwei ungeschützte und/oder reversibel geschützte Aldehydgruppen aufweisende chemische Verbindung B, mit der Maßgabe, daß das molare Verhältnis V der in der wäßrigen Polymerisatzubereitung insgesamt enthaltenen Gruppierungen I zur in der wäßrigen Polymerisatzubereitung in Form von Verbindungen B insgesamt enthaltenen molaren Menge an ungeschützten und/oder reversibel geschützten Aldehydgruppen 0,1 bis 10 zu 1 beträgt, und

C) kein Carbonsäurehydrazid.

Ferner betrifft die vorliegende Erfindung Verfahren zur Herstellung solcher wäßrigen Polymerisatzubereitungen und ihre Verwendung.

Wäßrige Lösungen oder Dispersionen von aus ethylenisch ungesättigte Kohlenstoff-Kohlenstoff-Bindungen aufweisenden Monomeren in polymerisierter Form aufgebauten Polymerisaten sind allgemein bekannt. Es ist ferner allgemein bekannt, daß derartige wäßrige Polymerisatlösungen oder -dispersionen die Eigenschaft beinhalten, beim Verdampfen des wäßrigen Lösungsmittels bzw. Dispergiermittels zusammenhängende, ein gewisses Haftvermögen aufweisende, Polymerisatfilme zu bilden, weshalb solche Polymerisatlösungen oder -dispersionen als Bindemittel für Zubereitungen der unterschiedlichsten Art zum Beschichten, Kleben, Dichten oder Imprägnieren empfohlen werden.

Aus den Schriften US-A 3 356 627, US-A 4 151 142, US-A 4 219 454, US-A 4 248 754, US-A 4 254 003, US-A 4 319 032, US-A 4 500 673, US-A 5 157 071, EP-A 3870, EP-A 9880, EP-A 29 891, EP-A 379 892 und CA-A 1 288 537 ist bekannt, daß Verfilmungen von Polymerisaten die Gruppen I aufweisen auf zahlreichen Materialien wie Holz, Metall, Mineralien, Papier, Textilien und Kunststoff, insbesondere aber auf alten Anstrichen auf der Basis trocknender Öle und/oder Alkydharze, eine erhöhte Haftung aufweisen, die insbesondere gegenüber der Einwirkung von Feuchtigkeit und Nässe eine verminderte Empfindlichkeit zeigt (erhöhte Naßhaftung).

Für viele Anwendungsgebiete wird neben einer erhöhten Haftung (Adhäsion) der polymeren Verfilmung gleichzeitig eine erhöhte innere Festigkeit (Kohäsion) derselben gefordert.

Aus der EP-A 184 091 werden wäßrige Polymerisatdispersionen als Bindemittel für blockfeste Anstrichfarben empfohlen, deren dispergierte Polymerisate neben ethylenisch ungesättigten Aldehyden auch Gruppierungen I aufweisende ethylenisch ungesättigte Monomere einpolymerisiert enthalten können. Nachteilig an der Lehre der EP-A 184 091 ist jedoch, daß sie zwar die Copolymerisation ethylenisch ungesättigter Aldehyde zum Zwecke der Erhöhung der inneren Festigkeit des Anstrichs empfiehlt, jedoch davon ausgeht, daß eine solche Erhöhung der inneren Festigkeit nur dann eintritt, wenn, bezogen auf die Menge des einpolymerisierten ethylenisch ungesättigten Aldehyds, in die Anstrichfarbe eine bestimmte Menge Dicarbonsäuredihydrazid eingerührt wird, die die Aldehydgruppen chemisch bindet.

Aus der EP-A 488 605, die die Copolymerisation von Gruppen (I) aufweisenden ethylenisch ungesättigten Monomeren als Formaldehydfänger empfiehlt, war bekannt, daß Gruppen (I) mit Aldehydgruppen chemische Bindungen einzugehen vermögen. Die in der EP-A 488 605 offenbarten Copolymeren können im Rahmen einer breiten Mannigfaltigkeit von Monomeren u.a. auch Acrolein einpolymerisiert enthalten.

In der US-A 3 455 861 wird empfohlen, in wäßrige Polymerisatdispersionen, die ethylenisch ungesättigte Aldehyde einpolymerisiert enthalten, zum Zwecke der Erhöhung der inneren Festigkeit ihrer Verfilmungen Harnstoff-Formaldehyd-Harze, d.h. Harze die Gruppen I aufweisen, einzurühren.

Im Rahmen der vorliegenden Erfindung wurde nun in überraschender Weise gefunden, daß die Kombination Polyaldehyd/einpolymerisierte Gruppe I entsprechend der Lehre des Standes der Technik zwar die innere Festigkeit der polymeren Verfilmung erhöht, die damit verknüpfte chemische Umsetzung zwischen Aldehydgruppen und Gruppen I die haftungserhöhende Wirkung der Gruppen I jedoch im wesentlichen nicht mindert.

Demgemäß lösen die eingangs definierten wäßrigen Polymerisatzubereitungen die Aufgabe, wäßrige Polymerisatzubereitungen zur Verfügung zu stellen, die im verfestigten Zustand einerseits eine erhöhte Haftung und andererseits gleichzeitig eine erhöhte innere Festigkeit aufweisen, ohne der Mitverwendung von Carbonsäurehydraziden zu bedürfen. Von besonderer Bedeutung ist dabei, daß die erhöhte innere Festigkeit auch dann eintritt, wenn die Verfilmung ohne Einwirkung erhöhter Temperatur erfolgt, wohingegen vorab einer Verfilmung der die erhöhte innere Festigkeit bewirkende Mechanismus im wesentlichen nicht greift, weshalb die erfindungsgemäßen wäßrigen Polymerisatzubereitungen in voll befriedigender Weise lagerstabil sind.

Mit Vorteil enthält das Polymerisat A Gruppen I aufweisende Monomere in solchen Mengen einpolymerisiert, daß ihr Gewichtsanteil, bezogen auf die Gesamtmenge der in A einpolymerisierten Monomeren, 0,1 bis 30, vorzugsweise 0,5 bis 10 und ganz besonders bevorzugt 1 bis 5 Gew.-% beträgt. Das Verhältnis V wird zweckmäßig so gewählt, daß es 1:0,1 bis 2, vorzugsweise 1:0,1 bis 1 und ganz besonders bevorzugt 1:0,5 bis 1 beträgt.

Bevorzugte Gruppen I sind:

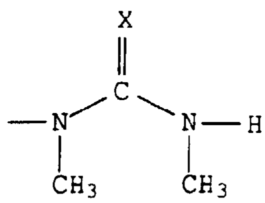

sowie

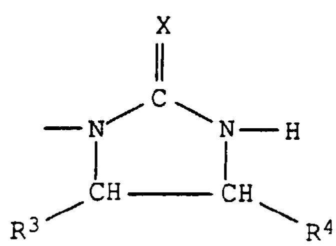

wobei jeder der beiden Substituenten $R^3$, $R^4$ Wasserstoff, eine Hydroxylgruppe oder eine $C_1$- bis $C_4$-Alkoxygruppe sein kann.

Unter den letzteren sind wiederum jene bevorzugt, in denen $R^3$ und $R^4$ beide gleichzeitig Wasserstoff oder $R^3$ Wasserstoff und $R^4$ eine $C_1$- bis $C_4$-Alkoxygruppe sind. X ist ganz allgemein vorzugsweise Sauerstoff.

Geeignete Gruppen I aufweisende copolymerisierbare Monomere sind solche der allgemeinen Formel II

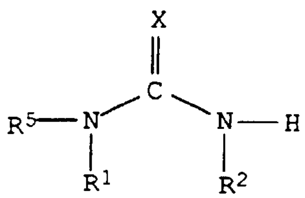

(II),

in der $R^5$ für einen Rest steht, der wenigstens eine ethylenisch ungesättigte C=C Bindung aufweist.

Beispielhaft seien als Reste $R^5$ genannt:

$CH_2=CH-$, $CH_2=CH-CH_2-$, 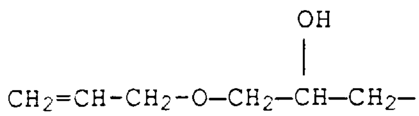

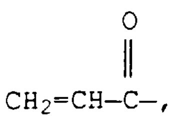, 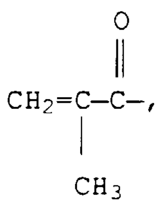, 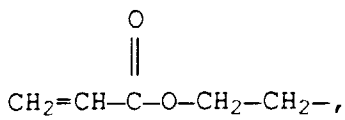, 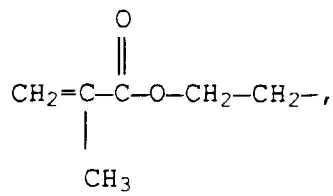,

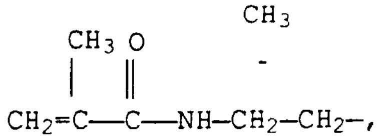, 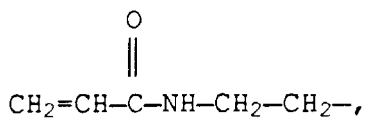,

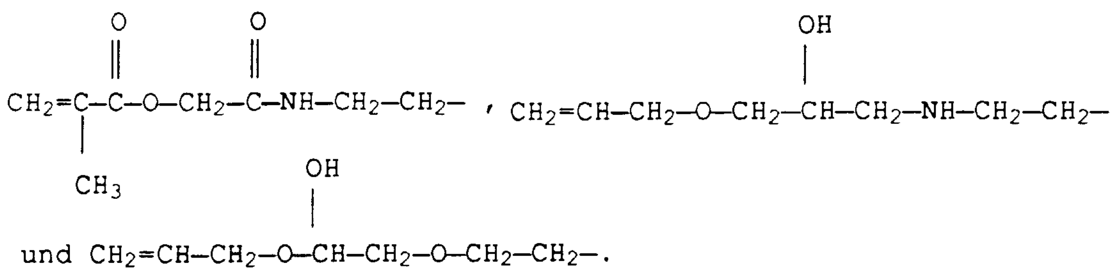

, und .

Als günstige copolymerisierbare Monomere II seien genannt:

N-Vinylethylenharnstoff, N-Methacryloxyacetoxyethylethylenharnstoff, N-di(3-allyloxy-2-hydroxypropyl)-aminoethylethylenharnstoff, N-(Acrylamidoethyl)ethylenharnstoff, N-(2-acryloyl-oxyethyl)-ethylenharnstoff, N-Methacrylamidomethyl-harnstoff, Allylalkylethylenharnstoff, N-(2-Methacryloxyacetamidoethyl)-N,N'-ethylenharnstoff, sowie insbesondere N-(2-Methacryloyl-oxyethyl)-ethylenharnstoff (auch [1-(2-methacryloyl-oxyethyl)imidazolin-2-on] genannt), N-(Methacrylamidoethyl)ethylenharnstoff und N-(3-allyloxy-2-hydroxypropyl)aminoethylethylenharnstoff.

Darüber hinaus eignen sich prinzipiell alle in den eingangs als Stand der Technik zitierten Patentschriften aufgeführten Gruppen I aufweisenden Monomeren. Entsprechende Monomere sind auch aus US-A 27 27 016, US-A 2 871 223, US-A 2 881 155, US-A 2 980 652, US-A-3 194 792, US-A 4 104 220, US-A 4 111 877 und US-A 4 559 417 bekannt. Weitere geeignete Wirkmonomere II werden in einem Übersichtsartikel von R.W. Kreis und A.M. Sherman, Developments in "Ureido Functional Monomer for Promoting Wet Adhesion in Latex Paints, Water-Borne and Higher-Solids Coating Symposium vom 03.-05.02.1988, New Orleans, Louisiana", genannt.

Neben den Monomeren II kommen zum Aufbau des Polymerisats A unter anderen insbesondere von den Monomeren II verschiedene monoethylenisch ungesättigte Monomere wie Styrol, α-Methylstyrol, o-Chlorstyrol oder Vinyltoluole, Ester aus Vinylalkohol und 1 bis 18 C-Atome aufweisenden Monocarbonsäuren wie Vinylacetat, Vinylpropionat,

Vinyl-n-butyrat, Vinyllaurat und Vinylstearat, Ester aus vorzugsweise 3 bis 6 C-Atome aufweisenden α,β-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen wie besonders Acrylsäure- und Methacrylsäuremethyl-, -ethyl, -n-butyl, -isobutyl und -2-ethylhexylester, Maleinsäuredimethylester oder Maleinsäure-n-butylester, Nitrile α,β-monoethylenisch ungesättigter Carbonsäuren wie Acrylnitril sowie $C_{4-8}$-konjugierte Diene wie 1,3-Butadien und Isopren in Betracht.

Die genannten Monomeren bilden neben den Monomeren II in der Regel die Hauptmonomeren, die, bezogen auf die Gesamtmenge der in das Polymerisat A einpolymerisierten Monomeren, normalerweise einen Anteil von mehr als 50 Gew.-% auf sich vereinen.

Monomere, die für sich polymerisiert üblicherweise Homopolymerisate ergeben, die eine erhöhte Wasserlöslichkeit aufweisen, werden im Normalfall lediglich als modifizierende Monomere in Mengen, bezogen auf die Gesamtmenge der in das Polymerisat A einpolymerisierten Monomeren, von weniger als 50 Gew.-%, in der Regel von bis zu 20, vorzugsweise von 0,1 bis 10 Gew.-% miteinpolymerisiert. Ihr Gewichtsanteil wird dann erhöht gewählt, wenn man wasserlösliche Polymerisate A anstrebt.

Beispiele für derartige Monomere sind 3 bis 6 C-Atome aufweisende α,β-monoethylenisch ungesättigte Mono- und Dicarbonsäuren und deren Amide wie z.B. Acrylsäure, Methacrylsäure, Maleinsäure, Fumarsäure, Itaconsäure, Acrylamid und Methacrylamid, ferner Vinylsulfonsäure und deren wasserlösliche Salze sowie N-Vinylpyrrolidon.

Von Bedeutung sind auch im Handel befindliche Monomere VEOVA® 9-11 (VEOVA X ist ein Handelsname der Firma Shell und steht für Vinylester (von Carbonsäuren, die auch als Versatic® X-Säuren bezeichnet werden) der allgemeinen Formel III

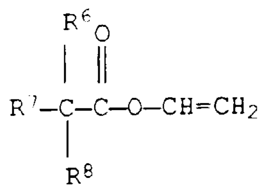
(III),

wobei $R^6$, $R^7$ und $R^8$ für Alkylreste stehen, deren Gesamtzahl an Kohlenstoffatomen ($R^6 + R^7 + R^8$) gleich X abzüglich 2 ist).

Als Hilfsmonomere können auch Monomere in das Polymerisat A einpolymerisiert werden, die eine Epoxy-, Hydroxy-, N-Methylol- oder Ketogruppe, oder wenigstens zwei nicht konjugierte ethylenisch ungesättigte Doppelbindungen aufweisen. Bezogen auf die Gesamtmenge der in das Polymerisat A einpolymerisierten Monomeren beträgt ihr Gewichtsanteil meist 0,5 bis 10 Gew.-%. Beispiele für solche Monomere sind N-Alkylolamide von 3 bis 10 C-Atome aufweisenden α,β-monoethylenisch ungesättigten Carbonsäuren sowie deren Ester mit 1 bis 4 C-Atome aufweisenden Alkoholen, unter denen das N-Methylolacrylamid und das N-Methylolmethacrylamid ganz besonders bevorzugt sind, zwei Vinylreste aufweisende Monomere, sowie zwei Alkenylreste aufweisende Monomere.

Besonders geeignet sind dabei die Di-Ester zweiwertiger Alkohole mit α,β-monoethylenisch ungesättigten Monocarbonsäuren unter denen wiederum die Acryl- und Methacrylsäure vorzugsweise eingesetzt werden. Beispiele für derartige, zwei nicht konjugierte ethylenisch ungesättigte Doppelbindungen aufweisende, Monomere sind Alkylenglycoldiacrylate und -dimethacrylate wie Ethylenglycoldiacrylat, 1,3-Butylenglycoldiacrylat, 1,4-Butylenglycoldiacrylat sowie Propylenglycoldiacrylat, Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat oder Triallylcyanurat. In diesem Zusammenhang von Bedeutung sind auch die Methacrylsäure- und Acrylsäure-$C_1$-$C_8$-Hydroxyalkylester wie Hydroxyethyl-, n-Hydroxypropyloder n-Hydroxybutylacrylat und -methacrylat sowie Verbindungen wie Diacetonacrylamid und 2-(Acetoacetoxy) ethylacrylat bzw. -methacrylat.

Zweckmäßigerweise erfolgt die Herstellung des wenigstens einen Polymerisats A nach der Methode der radikalisch initiierten Polymerisation. Prinzipiell sind aber auch die Verfahren der ionischen Lösungspolymerisation anwendbar. Polymerisiert man die ungesättigten Monomeren in organischer Lösung, wird letztere nach beendeter Polymerisation in wäßriges Medium überführt und das organische Lösungsmittel in der Regel destillativ entfernt. Ist das Polymerisat A im wäßrigen Medium nicht löslich, gibt man in der Regel Dispergiermittel zu und erzeugt so eine wäßrige Sekundärdispersion des Polymerisats A. Vorzugsweise wird man im Fall von nicht in Wasser löslichen Polymerisaten A zur Polymerisation jedoch die Methode der radikalischen wäßrigen Emulsionspolymerisation anwenden, im Rahmen derer unmittelbar eine wäßrige Polymerisatdispersion, eine Primärdispersion, erhalten wird.

Als Dispergiermittel kommen dabei sowohl die zur Durchführung von radikalischen wäßrigen Emulsionspolymerisationen üblicherweise eingesetzten Schutzkolloide als auch Emulgatoren in Betracht. Geeignete Schutzkolloide sind beispielsweise Polyvinylalkohole, Cellulosederivate oder Vinylpyrrolidon enthaltenden Copolymerisate. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Selbstverständlich können auch Gemische aus Emulgatoren und/oder Schutzkolloiden verwendet werden. Vorzugsweise werden als Dispergiermittel ausschließlich Emulgatoren eingesetzt, deren relative Molekulargewichte, im Unterschied zu den Schutzkolloiden, üblicherweise unter 1000 liegen. Sie können sowohl anionischer, kationischer oder nichtionischer Natur sein.

Selbstverständlich müssen im Falle der Verwendung von Gemischen grenzflächenaktiver Substanzen die Einzelkomponenten miteinander verträglich sein, was im Zweifelsfall an Hand weniger Versuche überprüft werden kann. Im allgemeinen sind anionische Emulgatoren untereinander und mit nicht-ionischen Emulgatoren verträglich. Desgleichen gilt auch für kationische Emulgatoren, während anionische und kationische Emulgatoren meistens miteinander unverträglich sind. Gebräuchliche Emulgatoren sind z.B. ethoxylierte Mono-, Di- und Tri-Alkylphenole (EO-Grad: 3 bis 50, Alkylrest: $C_4$- bis $C_9$), ethoxylierte Fettalkohole (EO-Grad: 0 bis 50, Alkylrest: $C_8$- bis $C_{36}$), sowie Alkali- und Ammoniumsalze von Alkylsulfaten (Alkylrest: $C_8$- bis $C_{12}$), von Schwefelsäurehalbestern ethoxylierter Alkanole (EO-Grad: 0 bis 30, Alkylrest: $C_{10}$-bis $C_{18}$) und ethoxylierter Alkylphenole (EO-Grad: 3 bis 50, Alkylrest: $C_4$- bis $C_{15}$), von Alkylsulfonsäuren (Alkylrest: $C_{12}$- bis $C_{18}$) und von Alkylarylsulfonsäuren (Alkylrest: $C_9$- bis $C_{18}$). Andere geeignete Emulgatoren finden sich in Houben-Weyl, Methoden der organischen Chemie, Band XIV/1, Makromolekulare Stoffe, Georg-Thieme Verlag, Stuttgart, 1961, Seiten 192 bis 208.

Weitere geeignete grenzflächenaktive Substanzen sind auch Verbindungen der allgemeinen Formel IV

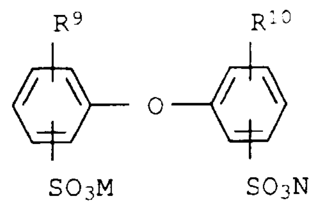

(IV),

worin $R^9$ und $R^{10}$ Wasserstoff oder $C_4$- bis $C_{24}$-Alkyl bedeuten und nicht gleichzeitig Wasserstoff sind, und M und N Alkalimetallionen und/oder Ammoniumionen sein können. In der Formel IV bedeuten $R^9$ und $R^{10}$ bevorzugt lineare oder verzweigte Alkylreste mit 6 bis 18 C-Atomen oder Wasserstoff, und insbesondere mit 6,12 und 16 C-Atomen, wobei $R^9$ und $R^{10}$ nicht beide gleichzeitig Wasserstoff sind. M und N sind bevorzugt Natrium, Kalium oder Ammoniumionen, wobei Natrium besonders bevorzugt ist. Besonders vorteilhaft sind Verbindungen (IV) in denen M und N Natrium, $R^9$ ein verzweigter Alkylrest mit 12 C-Atomen und $R^{10}$ Wasserstoff oder $R^9$ ist. Häufig werden technische Gemische verwendet, die einen Anteil von 50 bis 90 Gew.-% des monoalkylierten Produktes aufweisen, beispielsweise Dowfax® 2A1 (Warenzeichen der DOW Chemical Company). Die Verbindungen IV sind allgemein bekannt, z.B. aus der US-A 4 269 749, und im Handel erhältlich. Mit Vorteil enthält die erfindungsgemäße wäßrige Polymerisatdispersion, bezogen auf die Masse des Endpolymerisats, 1 bis 5 Gew.-% an grenzflächenaktiven Substanzen.

Als radikalische Polymerisationsinitiatoren kommen alle diejenigen in Betracht, die in der Lage sind, eine radikalische wäßrige Emulsionspolymerisation auszulösen. Es kann sich dabei sowohl um Peroxide, z.B. Alkalimetallperoxidsulfate, als auch um Azoverbindungen handeln. Mit Vorteil werden auch kombinierte Systeme, die aus wenigstens einem organischen Reduktionsmittel und wenigstens einem Peroxid und/oder Hydroperoxid zusammengesetzt sind, z.B. tert.-Butylhydroperoxid und das Natriummetallsalz der Hydroxymethansulfinsäure oder Wasserstoffperoxid und Ascorbinsäure, und ganz besonders bevorzugt kombinierte Systeme, die darüber hinaus eine geringe Menge einer im Polymerisationsmedium löslichen Metallverbindung, deren metallische Komponente in mehreren Wertigkeitsstufen auftreten kann, enthalten, z.B. Ascorbinsäure/Eisen(II)sulfat/Wasserstoffperoxid, eingesetzt, wobei anstelle von Ascorbinsäure auch häufig das Natriummetallsalz der Hydroxymethansulfinsäure, Natriumsulfit, Natriumhydrogensulfit oder Alkalimetallperoxidsulfate und/oder Ammoniumperoxidsulfat angewendet werden. Anstelle eines wasserlöslichen Eisen(II)-salzes wird häufig auch ein V-Salz oder eine Kombination aus wasserlöslichen Fe/V-Salzen benutzt. Vorzugsweise beträgt die Menge der eingesetzten radikalischen Initiatorsysteme, bezogen auf die Gesamtmenge der zu polymerisierenden Monomeren, 0,1 bis 2 Gew.-%.

Polymerisationsdruck und Polymerisationstemperatur sind von eher untergeordneter Bedeutung. Im allgemeinen arbeitet man bei Temperaturen zwischen Raumtemperatur und 100°C, vorzugsweise bei Temperaturen von 50 bis 95°C. Die Anwendung von erhöhtem oder vermindertem Druck ist möglich, so daß die Polymerisationstemperatur auch 100°C überschreiten und bis zu 130°C betragen kann. Vorzugsweise werden leichtflüchtige Monomere wie Ethylen, Butadien oder Vinylchlorid unter erhöhtem Druck polymerisiert. Zur pH-Wert Regulierung des Polymerisationsmediums kann während der erfindungsgemäßen radikalischen wäßrigen Emulsionspolymerisation beispielsweise Ammoniak oder ein Alkalimetallhydroxid zugegeben werden.

In der Regel wird die radikalische wäßrige Emulsionspolymerisation ansatzweise durchgeführt, wobei man in der

Regel einen Teil des Polymerisationsansatzes ins Polymerisationsgefäß vorlegt, auf die Polymerisationstemperatur erwärmt und den Rest des Polymerisationsansatzes unter Aufrechthalten der Polymerisationstemperatur dem Polymerisationsgefäß zuführt. Zweckmäßigerweise umfaßt die Vorlage in dem Fachmann an sich bekannter Weise eine sogenannte wäßrige Saatpolymerisatdispersion, was den Polymerisationsverlauf begünstigt.

Vorzugsweise werden im Rahmen des Zulaufverfahrens Monomere und Initiatoren über räumlich getrennte Zuläufe zugeführt. Mit Vorteil werden die Monomeren in in wäßrigem Medium voremulgierter Weise zugeführt. Selbstverständlich kann sich während des Zulaufverfahrens die Zusammensetzung der zuzuführenden Monomeren ändern. Diese Änderung kann stufenförmig oder sukzessive kontinuierlich erfolgen. Eine besonders bevorzugte Monomerenabfolge wird in der EP-A 184 091 beschrieben. In der Regel wird die radikalische wäßrige Emulsionspolymerisation so geführt, daß der resultierende Polymerisatgehalt, bezogen auf die Dispersion, 10 bis 80 Gew.-% beträgt. Der zahlenmittlere Teilchendurchmesser der dispergierten Polymerisatteilchen wird in dem Fachmann an sich bekannter Weise durch geeignete Wahl der Emulgatormenge so gesteuert, daß er im Bereich von 10 nm bis 3 µm liegt. Ein Maß für den mittleren Durchmesser der dispergierten Polymerisatteilchen ist die Lichtdurchlässigkeit (LD-Wert) der wäßrigen Polymerisatdispersion. Normalerweise wird mit einem handelsüblichen Photometer bei einer Wellenlänge von 0,546 µm und 25 mm Schichtdicke relativ zu Wasser gemessen. Wasser wird ein LD-Wert von 100 zugeordnet. Bezugstemperatur ist 25°C.

Erfolgt die Herstellung des Polymerisats A nach der Methode der radikalischen Polymerisation, können neben ungesättigte C=C Doppelbindungen aufweisenden Monomeren in untergeordneten Mengen, üblicherweise 0,01 bis 2 Gew.-%, bezogen auf die zu polymerisierenden Monomeren, das Molekulargewicht regelnde Substanzen wie tert.-Dodecylmercaptan sowie 3-Mercaptopropyltrimethoxysilan miteinpolymerisiert werden. Vorzugsweise werden derartige Substanzen im Gemisch mit den zu polymerisierenden Monomeren der Polymerisationszone zugegeben.

Sieht man von den Wirkmonomeren II einmal ab, wird die Zusammensetzung der übrigen das Polymerisat A konstituierenden Monomeren vorzugsweise so gewählt, daß nach der Beziehung von Fox für ein nur aus den übrigen das Polymerisat A konstituierenden Monomeren (nachfolgend Ü-Monomere genannt) aufgebautes Polymerisat eine Glasübergangstemperatur von -30 bis 50, besonders bevorzugt -10 bis 30°C resultiert. Nach Fox (T.G. Fox, Bull. Am. Phys. Soc. (Ser. II) 1, 123 (1956)) gilt für die Glasübergangstemperatur von Mischpolymerisaten in guter Näherung

$$\frac{1}{T_g} = \frac{X^1}{T_g^{\,1}} + \frac{X^2}{T_g^{\,2}} + \ldots . . \frac{X^n}{T_g^{\,n}},$$

wobei $X^1$, $X^2$, ..... $X^n$ die Massenbrüche der Monomeren 1, 2, ....., n und $Tg^1$, $Tg^2$, ....., $Tg^n$ die Glasübergangstemperaturen der jeweils nur aus einem der Monomeren 1, 2 oder n aufgebauten Polymerisate in Grad Kelvin bedeuten. Die Glasübergangstemperaturen dieser Homopolymerisate sind für die meisten Monomeren bekannt und z.B. in J. Brandrup, E.H. Immergut, Polymer Handbook 1st Ed. J. Wiley, New York 1966, 2nd Ed. J. Wiley, New York 1975, und 3rd Ed. J. Wiley, New York, 1989 aufgeführt.

Bevorzugte Polymerisate A sind solche, deren Ü-Monomere

- zu 70 bis 100 Gew.-% aus Estern der Acryl- und/oder Methacrylsäure mit 1 bis 12 C-Atome aufweisenden Alkanolen und/ oder Styrol,

oder

- zu 70 bis 100 Gew.-% aus Styrol und/oder Butadien,

oder

- zu 70 bis 100 Gew.-% aus Vinylchlorid und/oder Vinylidenchlorid,

oder

- zu 50 bis 100 Gew.-% aus Vinylacetat, Vinylpropionat und/oder Ethylen

zusammengesetzt sind.

Ganz besonders bevorzugte Polymerisate A sind solche, deren Ü-Monomere zusammengesetzt sind aus

- 70 bis 100 Gew.-% n-Butylacrylat, 2-Ethylhexylacrylat, Methylmethacrylat und/oder Styrol und

- 0 bis 30 Gew.-% Acrylsäure, Methacrylsäure, Acrylamid und/oder Methacrylamid.

Ferner sind ganz besonders bevorzugte Polymerisate A solche, deren Ü-Monomere zusammengesetzt sind aus

- 50 bis 100 Gew.-% Vinylacetat, Vinylpropionat und/oder Ethylen,
- 0 bis 50 Gew.-% 2-Ethylhexylacrylat, n-Butylacrylat, t-Butylacrylat und/oder VEOVA 9,10 sowie
- 0 bis 5 Gew.-% Acrylamid, Vinylsulfonsäure, die Salze der Vinylsulfonsäure, Acrylsäure und/oder Methacrylsäure.

Liegt die Glasübergangstemperatur des Polymerisats A der erfindungsgemäßen wäßrigen Polymerisatzubereitungen für den angestrebten Verwendungszweck zu hoch, so kann dies durch Zusatz von weichmachenden Mitteln in dem Fachmann an sich bekannter Weise kompensiert werden.

Der Bestandteil B der erfindungsgemäßen wäßrigen Polymerisatzubereitungen kann vom Bestandteil A sowohl verschieden als auch gleich dem Bestandteil A sein. Im letzteren Fall muß das Polymerisat A die entsprechende Menge an ethylenisch ungesättigten Aldehyden einpolymerisiert enthalten. Beispielhaft genannt seien Acrolein, Methacrolein, Formylstyrol, Crotonaldehyd, Zimtaldehyd, Citral sowie (Meth)acrylsäurealkylester mit ein oder zwei Aldehydgruppen im Alkylrest, z.B. (Meth)acryloxyalkylpropanale, wie sie in der DE-A 27 22 097 beschrieben sind. Neben copolymerisierbaren Aldehyden kommen aber auch copolymerisierbare Monomere in Betracht, die reversibel geschützte Aldehydgruppen aufweisen, z.B. Halbacetale oder Acetale, die im alkalischen Bereich beständig, im sauren Bereich jedoch in Aldehyd und Alkohol gespalten werden. Vorzugsweise handelt es sich um $C_1$- bis $C_4$-Alkohole. Beispiele hierfür sind (Meth)acrylamidderivate, die im Amidteil endständige Acetalgruppen tragen, z.B. N-(1,1-Dimethoxybut-4-yl)methacrylamid oder Acrylamidobutyraldehyddiethoxyacetal.

Vorzugsweise ist die Komponente B der erfindungsgemäßen wäßrigen Zubereitungen jedoch von der Komponente A verschieden (d.h. vorzugsweise enthält das Polymerisat A keine Aldehydgruppen) und wird in die wäßrigen Polymerisatzubereitungen lediglich eingerührt. Selbstverständlich kann es sich bei der einzurührenden Komponente um ein vom Polymerisat A verschiedenes, wenigstens zwei Aldehydgruppen aufweisendes Polymerisat B handeln, das, sieht man einmal von den Wirkmonomeren II des Polymerisats A und den Aldehydgruppen aufweisenden Bausteinen des Polymerisats B ab, wie das Polymerisat A aufgebaut sein kann. Vorzugsweise handelt es sich bei der Komponente B jedoch um niedermolekulare Polyaldehyde, unter denen die Dialdehyde besonders bevorzugt sind. Beispielhaft genannt seien ein bis zehn C-Atome aufweisende 1,$\omega$-Dialdehyde wie Glyoxal und Glutardialdehyd oder Malondialdehyd bzw. deren Acetale und Halbacetale. Es eignen sich aber auch Verbindungen wie Terephthaldialdehyd. Mit besonderem Vorteil wird Glyoxal verwendet. Geeignet sind auch Oligo- u. Polymere des Acroleins und/oder Methacroleins. Der pH-Wert der erfindungsgemäßen wäßrigen Polymerisatzubereitungen ist für den von den erfindungsgemäßen wäßrigen Polymerisatzubereitungen umfaßten Wirkmechanismus nicht besonders kritisch. Üblicherweise beträgt er 2 bis 12, vorzugsweise > 7 bis 12. Selbstverständlich können die erfindungsgemäßen wäßrigen Polymerisatzubereitungen zum Zwecke ihrer Anwendung mit von ihnen verschiedenen wäßrigen Polymerisatzubereitungen gemischt werden.

Die erfindungsgemäßen wäßrigen Polymerisatzubereitungen eignen sich insbesondere zum Beschichten, Kleben, Dichten oder Imprägnieren, wobei sie im verfestigten Zustand eine erhöhte Haftfähigkeit auf dem Substrat und eine erhöhte innere Festigkeit aufweisen. Neben den obligatorischen Bestandteilen A und B können sie auf den jeweiligen Verwendungszweck zugeschnitten die für diesen Verwendungszweck an sich üblichen Hilfsmittel enthalten. Lediglich eine Aldehydgruppe aufweisende Zusätze sollten weitgehend vermieden werden, da sie in der Regel das den erfindungsgemäßen wäßrigen Zubereitungen zugrundeliegende Wirkprinzip mindern. Sie dürfen allenfalls in untergeordneten Mengen, d.h. höchstens in einer Anzahl vorhanden sein, die kleiner ist als die Anzahl der in Form der Komponente B eingebrachten Aldehydgruppen.

Sollen die erfindungsgemäßen wäßrigen Zubereitungen als wäßrige Anstrichfarbe eingesetzt werden, handelt es sich vorzugsweise um eine wäßrige Polymerisatdispersion, wobei das dispergierte Polymerisat A vorzugsweise nach der Methode der radikalischen wäßrigen Emulsionspolymerisation erhalten worden ist. Neben den Komponenten A (bezogen auf die gesamte Zubereitung in der Regel 5 bis 50 Gew.-%), und der Komponente B, enthalten die Zubereitungen in diesem Fall als zusätzliche Bestandteile insbesondere anorganische Füllstoffe und Pigmente (z.B. Silicate wie Talkum oder Weißpigment wie $TiO_2$), in der Regel 5 bis 75 Gew.-%, sowie anstrichübliche Hilfsmittel wie Dispergiermittel für Pigmente und Füllstoffe, Verdicker, Entschäumer, Konservierungsmittel oder Filmbildehilfsmittel wie Kohlenwasserstoffe. Die Gesamtmenge dieser Hilfsmittel beträgt üblicherweise 0 bis 15 Gew.-%, bezogen auf die gesamte Anstrichzubereitung.

Die erfindungsgemäßen Anstrichzubereitungen zeigen insbesondere auf alten Anstrichen auf Basis trocknender Öle und/oder Alkydharze eine erhöhte Naßhaftung, bei gleichzeitig erhöhter Kohäsion.

Beispiel

a) Herstellung von wäßrigen Polymerisatdispersionen D1 bis D3 und DV (Vergleich)

D1: In einem Polymerisationsgefäß wurden 200 g Wasser, 75 g Zulauf 1, 25 g Zulauf 2, 12,5 g einer 20 gew.-%igen wäßrigen Lösung eines Gemisches ethoxylierter Fettalkohole ($C_{16/18}$, EO-Grad: 18, Emulgator 1) und 2,5 g einer 20 gew.-%igen wäßrigen Lösung der Dowfax 2A1 entsprechenden Wirksubstanz (Emulgator 2) miteinander gemischt und das Gemisch auf 85°C erwärmt. Anschließend wurde das Gemisch während 15 min. bei 85°C gehalten und dann, unter Aufrechterhaltung der Polymerisationstemperatur, zeitgleich beginnend die Restmenge des Zulauf 1 (innerhalb von 2 h) sowie die Restmenge des Zulauf 2 (innerhalb von 2 h 15 min.) dem Polymerisationsgefäß zugeführt. Im Anschluß wurde das System noch während 2 h bei 85°C unter Rühren sich selbst überlassen. Nach Abkühlen auf Raumtemperatur wurden 12 g einer 10 gew.-%igen wäßrigen Natronlauge zugesetzt.

Der LD-Wert der resultierenden Dispersion betrug 78 und der Feststoffgehalt lag bei 48,9 Gew.-%.

| | | |
|---|---|---|
| Zulauf 1: | 187 g | Wasser |
| | 25 g | 20 gew.-%ige wäßrige Lösung des Emulgator 1 |
| | 37,5 g | 20 gew.-%ige wäßrige Lösung des Emulgator 2 |
| | 15 g | 50 gew.-%ige wäßrige Lösung von Acrylamid |
| | 13,5 g | Methacrylsäure |
| | 10 g | N-(2-Methacryloyloxyethyl)-ethylenharnstoff als Wirkmonomeres II |
| | 150 g | Methylmethacrylat und |
| | 350 g | n-Butylacrylat |
| Zulauf 2 | 100 g | Wasser |
| | 2,5 g | Natriumperoxidisulfat |

DV: Wie D1, jedoch ohne das Wirkmonomere II in Zulauf 1. Feststoffgehalt: 49,6 Gew.-%, LD-Wert: 76;

D2: Wie D1, Zulauf 1 umfaßte jedoch 18 g anstelle von 10 g des Wirkmonomeren II.
Feststoffgehalt: 50,3 Gew.-%, LD-Wert: 76;

D3: Wie D1, Zulauf 1 enthielt jedoch 150 g Styrol anstelle von 150 g Methylmethacrylat.
Feststoffgehalt: 49,6 Gew.-%, LD-Wert: 63;

b) Aus je 100 ml der wäßrigen Polymerisatdispersion aus a) wurden durch Einrühren von Zg einer 40 gew.-%igen wäßrigen Lösung von Glyoxal nachfolgende wäßrige Polymerisatsysteme S und SV (Vergleich) zubereitet:

| Polymerisatsystem | Eingesetzte Dispersion | Z [g] | Verhältnis V |
|---|---|---|---|
| SV1 | DV | 0 | - |
| SV2 | DV | 0,32 | 0 |
| SV3 | D1 | 0 | - |
| S1 | D1 | 0,08 | 1:0,25 |
| S2 | D1 | 0,16 | 1:0,5 |
| S3 | D1 | 0,32 | 1:1 |
| S4 | D1 | 0,65 | 0,5:1 |
| SV4 | D3 | 0 | - |
| S5 | D3 | 0,32 | 1:1 |
| SV5 | D2 | 0 | - |
| S6 | D2 | 0,28 | 1:0,5 |
| S7 | D2 | 0,56 | 1:1 |

c) Prüfung von Verfilmungen der Polymerisatsysteme S und SV auf innere Festigkeit

Aus den Polymerisatsystemen aus b) wurden ca. 500 µm dicke Polymerfilme präpariert, indem in einer Siliconpfanne eine definierte Menge Polymerisatdispersion über einen Zeitraum von 4 Tagen bei 23°C u. 50 % rel. Luftfeuchtigkeit verfilmt wurde, und nachfolgenden Untersuchungen unterworfen:

1. Bestimmung des Quellwertes Q

$2\ cm^2$ flächige quadratische Filmstücke wurden während 24 h bei Raumtemperatur in 100 ml Tetrahydrofuran (THF) gelegt. Der Quellwert Q ist die THF-Aufnahme der Probenkörper, bezogen auf die Masse des Ausgangskörpers, in % (gravimetrisch ermittelt). Je größer Q, desto geringer ist die innere Festigkeit.

2. Ermittlung von Reißkraft K [$N/mm^2$] und Reißdehnung D [%]

Diese Untersuchungen erfolgten nach DIN 53504, bei einer Abzugsgeschwindigkeit von 200 mm/min, einer Prüftemperatur von 23°C und in Anwendung der Probenkörperform S2. Je größer K und je kleiner D, desto ausgeprägter ist die innere Festigkeit.

Die erhaltenen Ergebnisse zeigt die nachfolgende Tabelle 1:

Tabelle 1

| Polymerisatsystem | Q | K | D |
|---|---|---|---|
| SV1 | 963 | 2,7 | 546 |
| SV2 | 943 | 2,7 | 545 |
| SV3 | 712 | 3,5 | 504 |
| S1 | 593 | 4,0 | 416 |
| S2 | 541 | 4,2 | 369 |
| S3 | 487 | 4,5 | 338 |
| S4 | 476 | 4,0 | 304 |
| SV5 | 650 | 4,7 | 468 |
| S6 | 428 | 6,4 | 297 |
| S7 | 365 | 6,9 | 240 |

d) Herstellung einer Anstrichfarbe

Nach folgender Rezeptur wurden aus den Polymerisatsystemen S und SV Anstrichfarben formuliert:

| | |
|---|---|
| Wasser | 89 g |
| 25 gew.-%ige wäßrige Lösung des Na-Salzes eines Copolymerisats aus Maleinsäure und Di-Isobutylen (Dispergiermittel für Pigmente u. Füllstoffe) | 6 g |
| Parmetol® A23 (Konservierungsmittel) | 2 g |
| Natrosol® 250 HR (4 gew.-%ige wäßrige Verdickerlösung auf Basis Hydroxyethylcellulose) | 9 g |
| Propylenglykol | 32 g |
| Butyldiglykol | 10 g |
| Agitan® 702 (Entschäumer) | 4 g |
| Kronos® RHD-2 (feinteiliges $TiO_2$-Pigment) | 210 g |
| Talkum SE Micro (Füllstoff) | 106 g |
| Collacral PU 75 (Polyurethanassoziativverdicker) | 10 g |
| Butyldiglykol | 13 g |
| Kristallöl® K60 (Kohlenwasserstoffgemisch als Filmbildehilfsmittel) | 5 g |
| Polymerisatsystem S oder SV | 504 g |

e) Testung der Naßhaftung der Anstrichfarben aus d) auf einem Alkydharz-Anstrich

Zunächst wurde auf eine PVC-Folie eine hochglänzende lösemittelhaltige Alkydharzfarbe in einer Naßschichtdicke von 120 µm aufgetragen und einen Tag bei Raumtemperatur sowie 7 Tage bei 50°C im Umlufttrockenschrank getrocknet. Anschließend wurde auf den Alkydharzfarbanstrich mit einer Anstrichfarbe aus d) eine Naßschicht von 200 µm Dicke aufgetragen und 3 Tage bei 23°C/65 % rel. Luftfeuchtigkeit getrocknet. Danach wurde die Anstrichoberfläche durch einen Messerschnitt verletzt und die so präparierten Folien zur Überprüfung der Naßhaftung der Deckschicht auf der Alkydharzgrundschicht mehreren aufeinanderfolgenden Frost-Tau-Wechseln unterworfen. Innerhalb eines Frost-Tau-Wechsel Vorgangs wurden die beschichteten Folien zunächst 8 h in Wasser gelagert, dann 16 h bei -20°C gehalten und anschließend während 10 min bei 23°C in Wasser gestellt. Nach jedem Frost-Tau-Wechsel wurde die Haftung der Deckschicht auf der Grundschicht an der Einschnittstelle geprüft. Die Naßhaftungsergebnisse zeigt Tabelle 2.

Tabelle 2

| | | Zugrundeliegendes Polymerisatsystem | | | | |
|---|---|---|---|---|---|---|
| | | SV1 | SV3 | S3 | SV4 | S5 |
| 1. | F-T-Wechsel | mangelhaft | voll befriedigend | voll befriedigend | voll befriedigend | voll befriedigend |
| 2. | F-T-Wechsel | | voll befriedigend | voll befriedigend | voll befriedigend | befriedigend |
| 3. | F-T-Wechsel | | voll befriedigend | voll befriedigend | voll befriedigend | befriedigend |
| 4. | F-T-Wechsel | | voll befriedigend | voll befriedigend | voll befriedigend | befriedigend |
| 5. | F-T-Wechsel | | voll befriedigend | voll befriedigend | voll befriedigend | befriedigend |
| 6. | F-T-Wechsel | | voll befriedigend | befriedigend | befriedigend | befriedigend |

**Patentansprüche**

**1.** Wäßrige Polymerisatzubereitungen, enthaltend

A) wenigstens ein im wäßrigen Medium gelöstes und/oder dispergiertes, aus wenigstens eine ethylenisch ungesättigte Kohlenstoff-Kohlenstoff-Bindung aufweisenden Monomeren in polymerisierter Form aufgebautes Polymerisat A, mit der Maßgabe daß das Polymerisat A wenigstens eine Gruppierung der allgemeinen Formel I

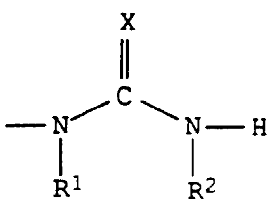

(I)

in der die Variablen bedeuten:

X: 0 oder S und

$R^1$,$R^2$: jedes von beiden Wasserstoff oder eine $C_1$- bis $C_5$-Alkylgruppe, oder beide zusammen eine überbrückende $C_2$- bis $C_4$-Alkylengruppe, die bis zu zweifach mit einer $C_1$- bis $C_4$-Alkoxygruppe und/oder Hydroxylgruppe substituiert sein kann,

aufweist,

B) wenigstens eine, wenigstens zwei ungeschützte und/oder reversibel geschützte Aldehydgruppen aufweisende, chemische Verbindung B, mit der Maßgabe, daß das molare Verhältnis V der in der wäßrigen Polymerisatzubereitung insgesamt enthaltenen Gruppierungen I zur in der wäßrigen Polymerisatzubereitung in Form von Verbindungen B insgesamt enthaltenen molaren Menge an ungeschützten und/oder reversibel geschützten Aldehydgruppen 0,1 bis 10 zu 1 beträgt,
und

C) kein Carbonsäurehydrazid.

2. Wäßrige Polymerisatzubereitungen nach Anspruch 1, deren Polymerisat A als Gruppe I eine Gruppe der allgemeinen Formel

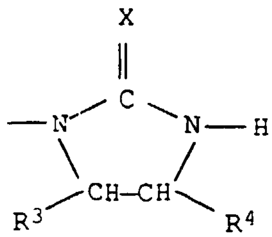

aufweist, wobei jeder der beiden Substituenten $R^3$, $R^4$ Wasserstoff, eine Hydroxylgruppe oder eine $C_1$- bis $C_4$-Alkoxygruppe sein kann.

3. Wäßrige Polymerisatzubereitungen nach Anspruch 1 oder 2, deren Polymerisat A Gruppen I aufweisende Monomere in solchen Mengen einpolymerisiert enthält, daß ihr Gewichtsanteil, bezogen auf die Gesamtmenge der in A einpolymerisierten Monomeren, 0,1 bis 30 Gew.-% beträgt.

4. Wäßrige Polymerisatzubereitungen nach den Ansprüchen 1 bis 3, enthaltend als chemische Verbindung B Glyoxal.

5. Wäßrige Polymerisatzubereitungen nach den Ansprüchen 1 bis 3, enthaltend als chemische Verbindung B ein Polymerisat A.

6. Verfahren zur Herstellung von wäßrigen Polymerisatzubereitungen nach Anspruch 1 bis 5, dadurch gekennzeichnet, daß man ein Monomerengemisch, das Monomere umfaßt, die eine Gruppierung (I) aufweisen, nach der Methode der radikalischen wäßrigen Emulsionspolymerisation polymerisiert und in die resultierende wäßrige Polymerisatdispersion eine chemische Verbindung B einrührt.

7. Verwendung wäßriger Polymerisatzubereitungen nach Anspruch 1 bis 5 als Mittel zum Beschichten, Kleben, Dichten oder Imprägnieren.

8. Wäßrige Polymerisatzubereitungen nach Anspruch 1 bis 5, enthaltend

- 5 bis 50 Gew.-% Polymerisat A,
- 5 bis 75 Gew.-% anorganische Füllstoffe und/oder Pigmente,
- 0 bis 15 Gew.-% anstrichübliche Hilfsmittel,
- wenigstens eine chemische Verbindung B in solchen Mengen, daß V 0,1 bis 10 zu 1 beträgt und
- Wasser.

**Claims**

1. An aqueous polymer composition containing

A) at least one polymer A dissolved and/or dispersed in an aqueous medium and composed of polymerized monomers having at least one ethylenically unsaturated carbon-carbon bond, with the proviso that the polymer A has at least one group of the formula I

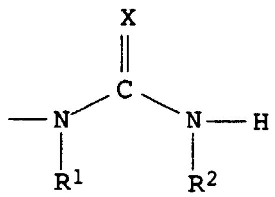

(I)

where

X is O or S and

$R^1$ and $R^2$ each hydrogen or $C_1$-$C_5$-alkyl or both together form a bridging $C_2$-$C_4$-alkylene group which may be monosubstituted or disubstituted by $C_1$-$C_4$-alkoxy and/or by hydroxyl,

B) at least one chemical compound B having at least two unprotected and/or reversibly protected aldehyde groups, with the proviso that the molar ratio R of the total amount of groups I contained in the aqueous polymer composition to the total molar amount of unprotected and/or reversibly protected aldehyde groups contained in said composition in the form of compounds B is from 0.1:1 to 10:1,
and

C) no hydrazide.

**2.** An aqueous polymer composition as claimed in claim 1, whose polymer A contains, as group I, a group of the formula

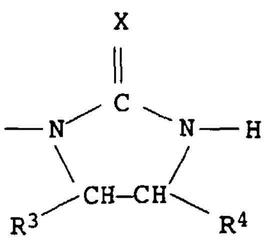

where each of the two substituents $R^3$ and $R^4$ may be hydrogen, hydroxyl or $C_1$-$C_4$-alkoxy.

**3.** An aqueous polymer composition as claimed in claim 1 or 2, whose polymer A contains monomers having groups I, in polymerized form, in amounts of from 0.1 to 30% by weight, based on the total amount of the monomers polymerized in A.

**4.** An aqueous polymer composition as claimed in any of claims 1 to 3, containing glyoxal as chemical compound B.

**5.** An aqueous polymer composition as claimed in any of claims 1 to 3, containing a polymer A as chemical compound B.

**6.** A process for the preparation of an aqueous polymer composition as claimed in any of claims 1 to 5, wherein a monomer mixture which comprises monomers which have a group I is polymerized by the free radical aqueous emulsion polymerization method, and a chemical compound B is stirred into the resulting aqueous polymer dispersion.

**7.** Use of an aqueous polymer composition as claimed in any of claims 1 to 5 as a coating material, adhesive, sealant or impregnating material.

**8.** An aqueous polymer composition as claimed in any of claims 1 to 5, containing

- from 5 to 50% by weight of polymer A,
- from 5 to 75% by weight of inorganic fillers and/or pigments,
- from 0 to 15% by weight of conventional coating assistants,
- at least one chemical compound B in an amount such that R is from 0.1:1 to 10:1 and
- water.

**Revendications**

**1.** Préparations aqueuses de polymères, contenant

A) au moins un polymère A, dissous et/ou dispersé en milieu aqueux, construit sous forme polymérisée à partir de monomères comportant au moins une liaison carbone-carbone à insaturation éthylénique, étant spécifié que le polymère A comporte au moins un groupement de formule générale I

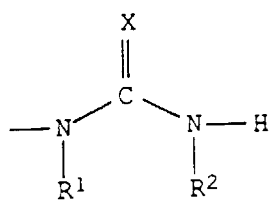

(I)

dans laquelle les variables signifient :

X: O ou et
$R^1$, $R^2$ : chacun un atome d'hydrogène ou un groupement alkyle en $C_1$-$C_5$, ou bien ils forment ensemble un groupement pontant alkylène en $C_2$-$C_4$, qui peut être substitué jusqu'à deux fois par un groupement alcoxy en $C_1$-$C_4$ et/ou par un groupement hydroxyle,

B) au moins un composé chimique B comportant au moins deux groupements aldéhyde non-protégés et/ou protégés de façon réversible, étant spécifié que le rapport en moles V de l'ensemble des groupements I contenus dans la préparation aqueuse de polymères, à la quantité en moles de l'ensemble des groupements aldéhyde, non protégés et/ou protégés de façon réversible, contenus sous forme de composés B dans la préparation aqueuse de polymères, s'élève à 0,1 à 10 pour 1,
et
C) ne contenant pas d'hydrazide d'acide carboxylique.

**2.** Préparations aqueuses de polymères selon la revendication 1, dont le polymère A comporte, comme groupement I, un groupement de formule générale

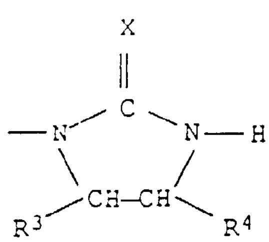

dans laquelle chacun des deux substituants $R^3$, $R^4$ peut être un atome d'hydrogène, un groupement hydroxyle ou un groupement alcoxy en $C_1$-$C_4$.

3. Préparations aqueuses de polymères selon la revendication 1 ou 2, dont le polymère A contient en liaison polymère des monomères contenant des groupements I, en quantité telle que leur proportion en poids s'élève à 0,1-30 % en poids, par rapport à la quantité totale de monomères contenus en liaison polymère dans A.

4. Préparations aqueuses de polymères selon l'une quelconque des revendications 1 à 3, contenant du glyoxal en tant que composé chimique B.

5. Préparations aqueuses de polymères selon l'une quelconque des revendications 1 à 3, contenant un polymère A en tant que composé chimique B.

6. Procédé de fabrication de préparations aqueuses de polymères selon l'une quelconque des revendications 1 à 5, caractérisé en ce que l'on polymérise un mélange de monomères, qui contient des monomères comportant un groupement (I), par le procédé de polymérisation radicalaire en émulsion aqueuse, et en ce que l'on incorpore un composé chimique B dans la dispersion aqueuse de polymères obtenue.

7. Utilisation de préparations aqueuses de polymères selon l'une quelconque des revendications 1 à 5 comme agent de revêtement, de collage, d'étanchéité ou d'imprégnation.

8. Préparations aqueuses de polymères selon l'une quelconque des revendications 1 à 5, contenant

- 5 à 50 % en poids de polymère A,
- 5 à 75 % en poids de charges minérales et/ou de pigments,
- 0 à 15 % en poids d'adjuvant de peinture usuel,
- au moins un composé chimique B en quantité telle que V s'élève à 0,1 à 10 pour 1, et
- de l'eau.